# EUROPEAN PATENT APPLICATION

(11) **EP 4 350 861 A1**
(43) Date of publication of application: **10.04.2024**
(21) Application number: 23820152.9
(22) Date of filing: 09.06.2023
(51) Int. Cl.: H01M 50/242, H01M 50/211, H01M 50/236, H01M 50/224, H01M 50/202, H01M 50/30, H01M 50/244, H01M 50/264, H01M 10/613

(54) **BATTERY PACK, METHOD FOR MANUFACTURING BATTERY PACK, AND VEHICLE INCLUDING BATTERY PACK**

(30) Priority: 10.06.2022 KR 20220070856
(71) Applicant: LG Energy Solution, Ltd., Seoul 07335 (KR)
(72) Inventor: KIM, Seung-Joon, Daejeon 34122 (KR); PARK, Jin-Yong, Daejeon 34122 (KR); KWON, Woo-Yong, Daejeon 34122 (KR); KIM, In-Soo, Daejeon 34122 (KR); CHUNG, Se-Yun, Daejeon 34122 (KR); CHI, Ho-June, Daejeon 34122 (KR)
(74) Representative: Goddar, Heinz J.
(86) International application number: PCT/KR2023/007982
(87) International publication number: WO 2023/239217

(57) **Abstract**

Provided are a battery pack and a battery pack manufacturing method. A battery pack according to an aspect of the present disclosure includes a battery assembly including a plurality of battery units that each include at least one battery cell and are stacked on each other, a tray including a plurality of first slots configured to allow the battery assembly to be inserted, and at least one fixing band coupled to an inlet of a first slot into which the battery assembly is inserted from among the plurality of first slots, to fix the battery assembly to the first slot into which the battery assembly is inserted.

## Description

### TECHNICAL FIELD

The present application claims priority to Korean Patent Application No. 10-2022-0070856 filed on June 10, 2022 in the Republic of Korea, the disclosures of which are incorporated herein by reference.

The present disclosure relates to a battery pack and a battery pack manufacturing method, and a vehicle including the battery pack, and more particularly, to a battery pack manufactured by using a cell-to-pack (CTP) method, a method of manufacturing the battery pack, and a vehicle including the battery pack.

### BACKGROUND ART

In general, a secondary battery refers to a battery that may be repeatedly charged and discharged, such as a lithium-ion battery, a lithium polymer battery, a nickel cadmium battery, a nickel hydride battery, or a nickel zinc battery. A battery cell corresponding to the most basic secondary battery may provide an output voltage of about 2.5 V to about 4.2 V.

Recently, as secondary batteries have been applied to devices requiring high output voltage and large charge capacity such as electric vehicles or energy storage systems (ESSs), a battery pack manufactured by connecting a plurality of battery cells in series or in parallel to form a battery module and connecting a plurality of battery modules in series or in parallel is widely used.

As such, because battery cells included in a battery module or a battery pack are densely arranged in a narrow space to increase energy density, it is necessary to precisely control a discharge direction of high-temperature gas or flame generated from each of the battery cells.

However, as disclosed in Korean Patent No. 10--2379227 and Korean Patent Publication No. 10-2022-0052183, because existing technology manufactures a battery pack by accommodating battery cells in a box-shaped metal case to form a battery module and accommodating battery modules in a case of a battery pack again, the weight and volume of the entire battery pack may be increased and the energy density of the battery pack may be reduced.

On the other hand, when a number of battery cells are directly accommodated in a case of a battery pack in order to increase the energy density of the battery pack, the risk of damage to the battery cells due to external impact or vibration may be increased, and a discharge direction of gas, flame, or a foreign material generated during thermal runaway of a battery cell as well as swelling of the battery cell may not be appropriately controlled.

### DISCLOSURE

### Technical Problem

The present disclosure is designed to solve the problems of the related art, and therefore the present disclosure is directed to providing a battery pack and a battery pack manufacturing method capable of preventing damage to battery cells due to external impact or vibration while reducing the weight and volume of the entire battery pack and increasing the energy density of the battery pack, and a vehicle including the battery pack.

The present disclosure is also directed to providing a battery pack and a battery pack manufacturing method capable of facilitating handling and mounting of battery cells mounted inside the battery pack, and a vehicle including the battery pack.

The present disclosure is also directed to providing a battery pack and a battery pack manufacturing method capable of controlling a discharge direction of gas, flame, or a foreign material generated during thermal runaway of a battery cell as well as swelling of the battery cell, and a vehicle including the battery pack.

### Technical Solution

In one aspect of the present disclosure, there is provided a batter pack including a battery assembly including a plurality of battery units that each include at least one battery cell and are stacked on each other, a tray including a plurality of first slots configured to allow the battery assembly to be inserted, and at least one fixing band coupled to an inlet of a first slot into which the battery assembly is inserted from among the plurality of first slots, to fix the battery assembly to the first slot into which the battery assembly is inserted.

In an embodiment, each of the plurality of battery units included in the battery assembly may further include a cell cover including a second slot into which the at least one battery cell is inserted and configured to cover the at least one battery cell inserted into the second slot.

In an embodiment, the cell cover may further include an opening through which an electrode lead of the at least one battery cell inserted into the second slot is exposed to an outside, wherein each of the plurality of battery units further includes a bus bar electrically connected to the electrode lead of the at least one battery cell, and a bus bar frame located in the opening of the cell cover to support the bus bar.

In an embodiment, the cell cover may include a first cover portion forming a first side wall of the second slot, a second cover portion facing the first cover portion at a certain interval to form a second side wall of the second slot, and a third cover portion connecting the first cover portion to the second cover portion.

In an embodiment, each of the plurality of battery units may further include a clamping member configured to clamp the cell cover so that a gap between the first cover portion and the second cover portion of the cell cover is not widened.

In an embodiment, the battery assembly may further include a support band closely attached to outer surfaces of the plurality of battery units that are stacked on each other and supporting the plurality of battery units so that a stacked state of the plurality of battery units is maintained.

In an embodiment, the battery assembly may further include a side plate located between a side surface of an outermost battery unit from among the plurality of battery units and the support band.

In an embodiment, each of the plurality of first slots may include an inner surface that contacts the battery assembly and guides movement of the battery assembly in an insertion direction when the battery assembly is inserted, wherein the inner surface includes a sliding groove along which a portion of the support band is inserted and slides in the insertion direction of the battery assembly when the battery assembly is inserted into the first slot including the inner surface and moves.

In an embodiment, the tray may include a plurality of walls arranged parallel to each other at certain intervals to form the plurality of first slots, and a base portion coupled to the plurality of walls to support the plurality of walls.

In an embodiment, the battery assembly may further include a support band closely attached to outer surfaces of the plurality of battery units that are stacked on each other and supporting the plurality of battery units so that a stacked state of the plurality of battery units is maintained, wherein the base portion includes a seating surface on which the battery assembly inserted into any one of the plurality of first slots is seated, and a fixing groove into which the support band of the battery assembly seated on the seating surface is inserted and fixed.

In an embodiment, the plurality of walls may include a first wall and a second wall forming the first slot into which the battery assembly is inserted, wherein the at least one fixing band extends in one direction so that one end in an extending direction is coupled to the first wall and the other end in the extending direction is coupled to the second wall.

In an embodiment, the base portion may include a pocket provided on a seating surface of the base portion on which the battery assembly inserted into any one of the plurality of first slots is seated, the pocket being configured to collect things with mass discharged and falling from the at least one battery cell included in the battery assembly.

In an embodiment, the base portion may further include a gas path extending along an inside of the base portion, wherein the gas path is connected to an inner space of the pocket.

In another aspect of the present disclosure, there is provided a vehicle including the battery pack according to any one of the above embodiments.

In still another aspect of the present disclosure, there is provided a battery pack manufacturing method for manufacturing the battery pack according to any one of the above embodiments, the battery pack manufacturing method including causing a pair of gripping plates configured to be movable to contact both side surfaces of the battery assembly to hold the battery assembly, moving the pair of gripping plates holding the battery assembly to align the battery assembly with an inlet of a pre-determined first slot from among the plurality of first slots of the tray, and moving a pressing plate configured to be movable between the pair of gripping plates and pressing the battery assembly located between the pair of gripping plates toward the pre-determined first slot to insert the battery assembly into the pre-determined first slot.

### Advantageous Effects

According to the present disclosure, because battery units each including at least one battery cell are directly mounted on a tray of a battery pack by using a cell-to-pack (CTP) method, rather than being accommodated in a separate case and then mounted on the tray of the battery pack, the weight and volume of the entire battery pack may be reduced and the energy density of the battery pack may be increased.

In particular, because battery units that are stacked on each other are inserted into and mounted in a first slot provided in the tray and a fixing band is coupled to an inlet of the first slot to fix the battery units to the first slot, battery cells included in the battery units may be prevented from being damaged by external impact or vibration.

Also, because a cell cover of each battery unit includes a second slot into which at least one battery cell is inserted and is configured to cover the at least one battery cell inserted into the second slot, each battery unit may be manufactured by inserting one or more battery cells into the second slot of a corresponding cell unit, and the battery pack may be manufactured by inserting the battery units configured as described above into the first slot of the tray. As a result, handling and mounting of battery cells during battery pack manufacturing may be facilitated, and manufacturing costs may be reduced. Also, a discharge direction of gas or flame generated during thermal runaway of a battery cell as well as swelling of the battery cell may be appropriately controlled.

Also, because a plurality of battery units that each include at least one battery cell and are stacked on each other constitute one battery assembly that is supported by a support band and handled as one body, handling and mounting of battery cells during battery pack manufacturing may be further facilitated.

Because a pocket is provided on the tray of the battery pack to collect things with mass such as particles or foreign materials discharged from a battery cell during thermal runaway of the battery cell, gas discharge during thermal runaway of the battery cell may be facilitated, and damage or explosion of the battery pack due to an increase in internal pressure of the battery pack may be prevented.

Furthermore, one of ordinary skill in the art will clearly understand from the following description that various embodiments of the present disclosure may also be used to solve various technical problems not mentioned above.

### DESCRIPTION OF DRAWINGS

FIG. 1 is a view illustrating a battery pack, according to an embodiment of the present disclosure.
FIG. 2 is a view illustrating a battery assembly of the battery pack of FIG. 1.
FIG. 3 is a cross-sectional view illustrating the battery assembly taken along line S1-S1' of FIG. 2.
FIG. 4 is a view illustrating an example of a battery unit included in the battery assembly of FIG. 2.
FIG. 5 is an exploded perspective view illustrating the battery unit of FIG. 4.
FIG. 6 is a view illustrating a lower end portion of the battery unit of FIG. 4.
FIG. 7 is a view illustrating a tray of the battery pack of FIG. 1.
FIG. 8 is a cross-sectional view illustrating a seating state of a battery unit seated on a base portion of a tray.
FIGS. 9 and 10 are views illustrating a battery unit assembly method, according to an embodiment of the present disclosure.
FIG. 11 is a view illustrating a cell cover of a battery unit, according to a modified embodiment.
FIG. 12 is a view illustrating a cell cover of a battery unit, according to another modified embodiment.
FIGS. 13 to 16 are views illustrating a battery pack manufacturing method, according to an embodiment of the present disclosure.
FIG. 17 is a view illustrating a vehicle, according to an embodiment of the present disclosure.

### BEST MODE

Hereinafter, embodiments of the present disclosure will be described in detail with reference to the accompanying drawings to provide solutions to the technical problems of the present disclosure. However, in the description of the present disclosure, detailed explanations of related known technologies are omitted when it is deemed that they may unnecessarily obscure the essence of the present disclosure. Also, the terms used herein are those defined in consideration of functions in the present disclosure, and may vary according to the intention of designers or manufacturers, precedents, etc. Hence, the terms used herein should be defined based on the meaning of the terms together with the descriptions throughout the specification.

For reference, in the specification, the terms indicating directions are terms based on elements shown in the accompanying drawings, and are relative terms that may vary according to postures or positions of actual elements.

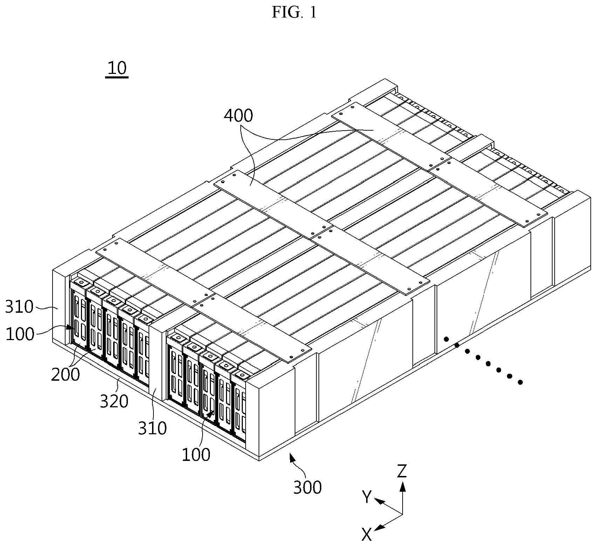

FIG. 1 illustrates a battery pack 10, according to an embodiment of the present disclosure.

As shown in FIG. 1, the battery pack 10 according to an embodiment of the disclosure may include a battery assembly 100 and a tray 300.

The battery assembly 100 includes a plurality of battery units 200 that are stacked on each other. Each battery unit 200 includes at least one battery cell corresponding to the most basic secondary battery that may be charged and discharged.

The tray 300 has a structure in which the battery assembly 100 is directly mounted without a separate case. That is, the tray 300 has a plurality of slots configured to allow the battery assembly 100 to be inserted. As described again below, the tray 300 may include a plurality of walls 310 that are located parallel to each other at certain intervals to form a plurality of slots, and a base portion 320 coupled to the plurality of walls 310 to support the plurality of walls 310.

In an embodiment, the battery pack 10 may further include a plurality of fixing bands 400. Each fixing band 400 may be coupled to an inlet of a slot into which the battery assembly 100 is inserted from among the slots provided in the tray 300, to fix the battery assembly 100 to the slot into which the battery assembly 100 is inserted.

In this case, the fixing band 400 may be coupled to the inlet of the slot through a fastening member such as screw or bolts, or welding.

The number of slots provided in the tray of the battery pack 10 according to the present disclosure and the number of battery assemblies 100 mounted on the tray 300 may be changed in various ways. Also, although not shown in FIG. 1, the battery pack 10 according to an embodiment of the present disclosure may further include a lid coupled to the tray 300 to prevent the battery assembly 100 from being exposed to the outside.

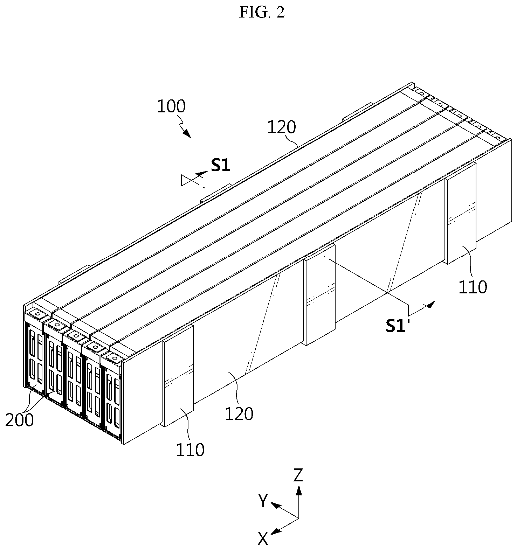

FIG. 2 illustrates the battery assembly 100 of the battery pack of FIG. 1.

As shown in FIG. 2, the battery assembly 100 includes a plurality of battery units 200 that are stacked on each other in one direction (Y-axis direction).

Also, the battery assembly 100 may further include at least one support band 110 that is closely attached to outer surfaces of the plurality of battery units 200 stacked on each other and supports the plurality of battery units 200 so that a stacked state of the plurality of battery units 200 is maintained.

In this case, the support band 110 may be closely attached to both side surfaces and a bottom surface of a battery unit stack to maintain a stacked state of the stack. To this end, the support band 110 may be provided in a 'U' or ' 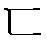 ' shape.

The support band 110 may be formed of a metal material having a certain stiffness and elasticity.

In an embodiment, the battery assembly 100 may further include a side plate 120 located between a side surface of an outermost battery unit from among the plurality of battery units and the support band 110.

The side plate 120 evenly distributes pressure applied from the support band 110 throughout the battery unit 200. In this case, the side plate 120 may be formed of a metal material having a certain stiffness, a polymer synthetic resin having a certain stiffness and insulation, or a combination thereof.

The scale or size of the battery assembly 100 may be changed in various ways according to the number or size of the battery units 20 that are stacked.

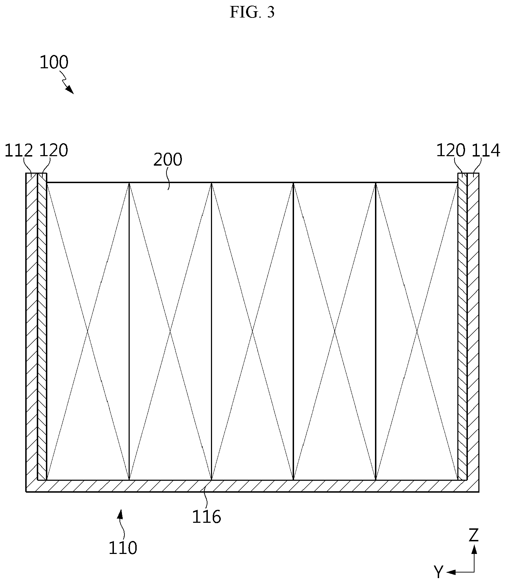

FIG. 3 is a cross-sectional view illustrating the battery assembly taken along line S1-S1' of FIG. 2.

As shown in FIG. 3, the support band 110 of the battery assembly 100 may extend from one side surface to the other side surface through a bottom surface of the battery unit stack in which the plurality of battery units 200 are stacked to support the bottom surface and both side surfaces of the battery unit stack in a stacking direction (Y-axis direction).

In this case, the support band 110 may include a first support portion 112 closely attached to one outermost battery unit of the battery unit stack, a second support portion 114 closely attached to the other outermost battery unit of the battery unit stack, and a third support portion 116 supporting the bottom surface of the battery unit stack. Also, the first support portion 112 and the second support portion 114 of the support band 110 may be configured to press the battery unit stack on both sides of the battery unit stack.

The side plate 120 may be located between the one outermost battery unit and the first support portion 112 and between the other outermost battery unit and the second support portion 114.

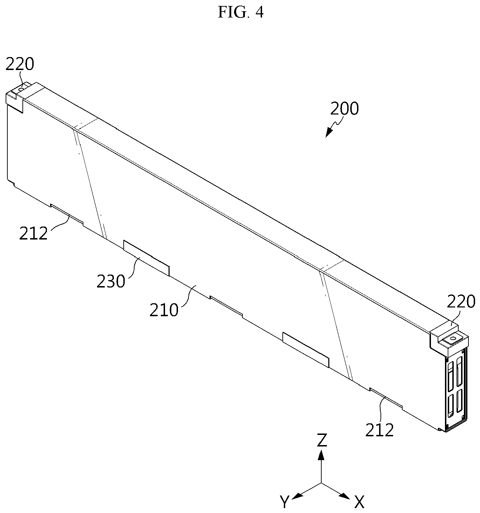

FIG. 4 is a view illustrating an example of the battery unit 200 included in the battery assembly of FIG. 2.

As shown in FIG. 4, the battery unit 200 may include a cell cover 210 that partially covers and supports at least one battery cell to maintain the battery cell in an upright state.

In an embodiment, the cell cover 210 may include an insertion groove 212 provided at a lower end of the cell cover 210 contacting the support band110 and allowing a portion of the support band 110 to be inserted thereinto.

Because a portion of the support band 110 is inserted into the insertion groove 212 of the cell cover 210, a coupling force between the battery unit 200 and the support band 110 may be increased and a position change of the battery unit 200 due to vibration or external force may be prevented.

Also, the battery unit 200 may further include a bus bar assembly 220. The bus bar assembly 220 may include a bus bar electrically connected to an electrode lead of a battery cell inserted into the cell cover 210, and may be located at both ends of the cell cover 210 in a longitudinal direction (X-axis direction).

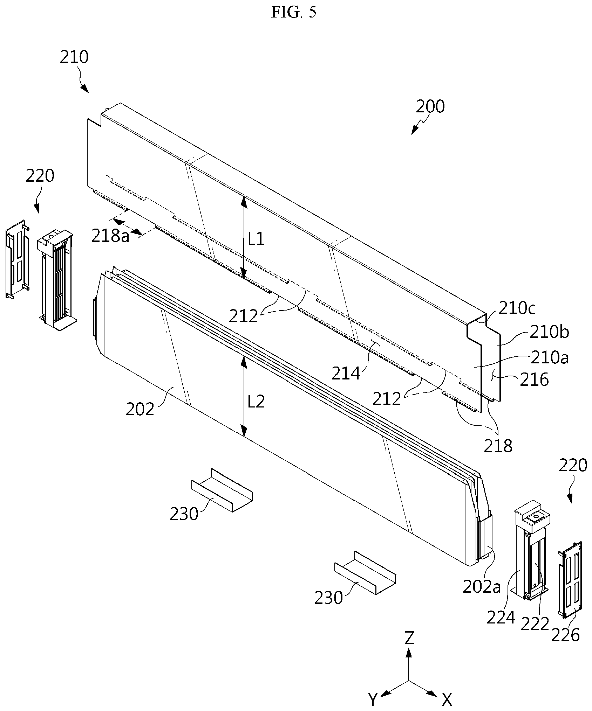

FIG. 5 is an exploded perspective view illustrating the battery unit 200 of FIG. 4.

As shown in FIG. 5, the battery unit 200 may include at least one battery cell 202 and the cell cover 210.

The battery cell 202 corresponds to the most basic secondary battery that may be charged and discharged, and may be manufactured by accommodating an electrode assembly and an electrolyte in a case and sealing the case. The electrode assembly may be manufactured by locating a separator between a positive electrode and a negative electrode.

The battery cell 202 may be a pouch-type secondary battery having a certain length and height. Also, electrode leads 202a electrically connected to the electrode assembly may be provided on both ends of the battery cell 202 in the longitudinal direction (X-axis direction).

The cell cover 210 may include a slot 214 into which at least one battery cell 202 is inserted, and may be configured to cover the at least one battery cell 202 inserted into the slot 214. In this case, the cell cover 210 may be configured to partially cover and support the at least one battery cell 202 to maintain the battery cell 202 in an upright state.

For example, as shown in FIG. 5, the cell cover 210 may be configured to partially cover and support three battery cells 202 that are stacked on each other to maintain the battery cells in an upright state.

To this end, the cell cover 210 may include the slot 214 into which at least one battery cell 202 is inserted, and an opening 216 through which the electrode lead 202a of the at least one battery cell 202 inserted into the slot 214 is exposed to the outside of the cell cover 210, and may be configured to cover the at least one battery cell 202 inserted into the slot 214.

When the battery unit 200 is inserted into a slot of the tray 300, the cell cover 210 may be located so that an inlet of the slot 214 faces the base portion 320 of the tray 300.

The cell cover 210 may be provided in an 'n' shape or a 'u' shape surrounding three surfaces of the at least one battery cell.

For example, the cell cover 210 may include a first cover portion 210a forming one side wall of the slot 214 into which at least one battery cell is inserted, a second cover portion 210b forming the other side wall of the slot 214, and a third cover portion 210c connecting the first cover portion 210a to the second cover portion 210b to form an end of the slot 214.

That is, the first cover portion 210a may cover one side surface of battery cells inserted into the slot 214. Also, the second cover portion 210b may cover the other side surface of the inserted battery cells. Also, the third cover portion 210c may cover an upper end of the inserted battery cells.

In this case, the inlet of the slot 214 and the opening 216 through which the electrode lead 202a of at least one battery cell 202 inserted into the slot 214 is exposed may be provided between the first cover portion 210a and the second cover portion 210b.

A height of the cell cover 210 (or a depth of the slot 214) L1 may be greater than a height L2 of the battery cell 202 in an upright state. Accordingly, a free space generated in a slot 214 into which the battery cell 200 is inserted may be used as a gas discharge passage.

Although the number of battery cells 202 covered by one cell cover 210 is three in FIG. 5, the number of battery cells covered by the cell cover 210 may be changed in various ways according to the scale of the cell cover 210.

In an embodiment, the battery unit 200 may further include the bus bar assembly 220. The bus bar assembly 220 may include a bus bar 222 electrically connected to the electrode lead 202a of the battery cell 202 inserted into the cell cover 210, and a bus bar frame 224 located in the opening 216 of the cell cover 210 to support the bus bar 222.

Also, the bus bar assembly 220 may further include an insulating cover 226 that prevents a short-circuit of the bus bar 222 coupled to the bus bar frame 224. The insulating cover 226 may be formed of a polymer synthetic resin having insulation.

As described above, the cell cover 210 may include the insertion groove 212 provided at a lower end of the cell cover 210 contacting the support band 110 and allowing a portion of the support band 110 to be inserted thereinto.

In an embodiment, the cell cover 210 may further include a blocking portion 218 located at the inlet of the slot 214 to prevent detachment of the battery cell inserted into the slot 214. The blocking portion 218 may protrude from an end of each of the first cover portion 210a and the second cover portion 210b toward the inlet of the slot 214 to support a lower end of battery cells inserted into the slot 214.

Also, in an embodiment, the blocking portion 218 may include a jig insertion groove 218a into which a finger of a jig that contacts an inner surface of the cell cover 210 and changes a width of the slot 214, that is, a gap between the first cover portion 210a and the second cover portion 210b, is inserted.

The cell cover 210 may be formed as one body. For example, the cell cover 210 may be integrally manufactured through a sheet metal processing process or an injection process.

As such, because the cell cover 210 having a simple structure is formed of a metal material having higher stiffness than a case of the battery cell, the cell cover 210 may protect the battery cell covered by the cell cover from external impact or vibration. For example, the cell cover 210 may be formed of a material including stainless steel (SUS) that is easily processed and has high corrosion resistance.

In an embodiment, the battery unit 200 may further include a clamping member 230. The clamping member 230 may clamp the cell cover 210 into which battery cells are inserted, to prevent the slot 214 of the cell cover 210 from being widened or the battery cell 202 inserted into the slot 214 from being separated from the cell cover 210.

For example, the clamping member 230 may clamp the cell cover 210 so that a gap between the first cover portion 210a and the second cover portion 210b of the cell cover 210 is not widened. The clamping member 230 may be formed of a tape or a band-shaped metal material.

As such, because the battery cell 202 is inserted into the slot 214 of the cell cover 210, damage to the battery cell 202 due to external impact or vibration may be prevented, and a venting direction of gas or flame discharged during thermal runaway of the battery cell 202 may be controlled toward the inlet of the slot of the cell cover 210.

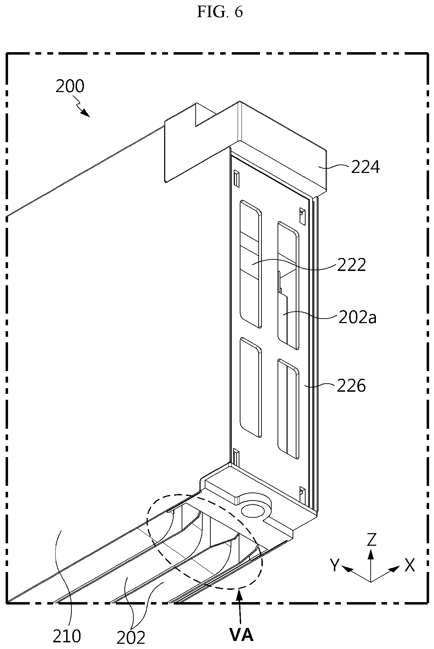

FIG. 6 illustrates a lower end portion of the battery unit 200 of FIG. 4.

As shown in FIG. 6, because a body of the battery cell 202 inserted into the cell cover 210 of the battery unit 200 and the bus bar frame 224 coupled to an end of the cell cover 210 are spaced apart from each other, a venting area VA through which gas of the battery cell 202 is discharged may be provided at a lower end of the battery unit 200. As described again below, a pocket 324 of the tray 300 described below may be provided at a position corresponding to the venting area VA of the battery unit 200.

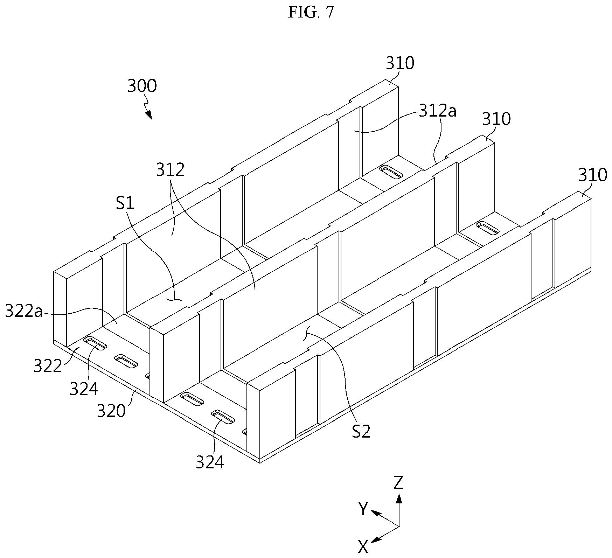

FIG. 7 illustrates the tray 300 of the battery pack of FIG. 1.

As shown in FIG. 7, the tray 300 has a structure in which the battery assembly 100 is directly mounted without a separate case. That is, that tray 300 includes a plurality of slots S1, S2 configured to allow the battery assembly 100 to be inserted.

Each of the plurality of slots S1, S2 may include an inner surface 312 that contacts, when the battery assembly 100 is inserted, the battery assembly 100 and guides movement of the battery assembly 100 in an insertion direction.

In this case, the inner surface 312 may include a sliding groove 312a along which, as the battery assembly 100 is inserted into a slot including the inner surface 312 and moves, a portion of the support band 110 located on an outer surface of the battery assembly 100 is inserted and slides in the insertion direction of the battery assembly 100.

Because the support band 110 of the battery assembly 100 moves after being inserted into the sliding groove 312a provided in the inner surface 312 of each of the slots S1, S2, the battery assembly 100 may be easily inserted into a correct position, the contact area between the tray 300 and battery units of the battery assembly 100 may be increased, and the supporting and cooling performance of the tray 300 that supports the battery units may be improved.

To this end, the tray 300 may include a plurality of walls 310 arranged parallel to each other at certain intervals to form the plurality of slots S1, S2, and the base portion 320 coupled to the plurality of walls 310 to support the plurality of walls 310. In this case, an interval between the plurality of walls may correspond to a width of the battery assembly 100.

Also, the base portion 320 may include a seating surface 322 on which the battery assembly 100 inserted into any one of the plurality of slots S1, S2 is seated, and a fixing groove 322a into which the support band 110 of the battery assembly 100 seated on the seating surface 322 is inserted and fixed.

Because at least a part of the support band 110 of the battery assembly 100 is inserted into and fixed to the fixing groove 322a of the base portion 320, a coupling force between the battery assembly 100 and the tray 300 may be increased, and a position change of the battery assembly 100 due to vibration or external force may be prevented.

The fixing band 400 of the battery pack 10 described with reference to FIG. 1 may extend in one direction so that both ends in an extending direction are coupled to two walls forming each of the slots S 1, S2 into which the battery assembly 100 is inserted.

Also, in an embodiment, the base portion 320 may include the pocket 324 provided on the seating surface 322. The pocket 324 may be configured to collect things with mass such as particles or foreign materials discharged from battery cells of the battery assembly 100 seated on the seating surface 322 and falling due to their weight. In this case, an inlet of the pocket 324 may be provided at a position corresponding to the slot inlet of the cell cover 210.

Also, the base portion 320 may include a heat sink for cooling heat of the battery assembly 100 seated on the seating surface 322.

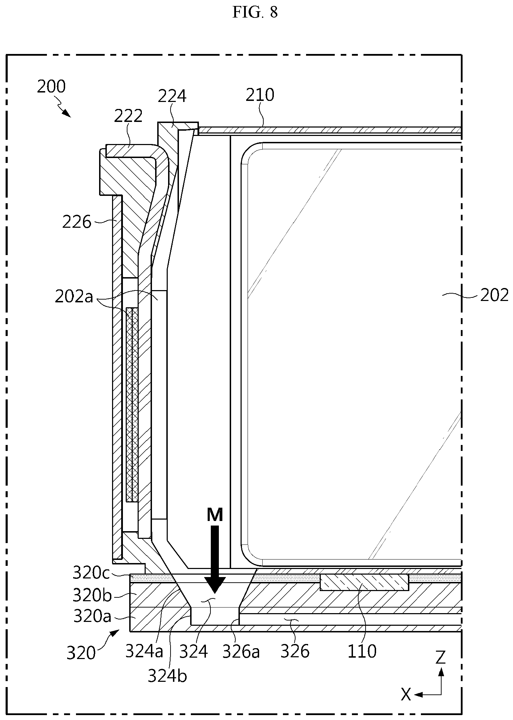

FIG. 8 is a cross-sectional view illustrating a seating state of the battery unit 200 seated on the base portion 320.

As shown in FIG. 8, when the battery unit 200 is seated on the base portion 320 of the tray 300, the cell cover 210 of the battery unit 200 may be located so that an inlet of the slot 214 faces the seating surface 322 of the base portion 320.

Also, an inlet of the pocket 324 provided on the seating surface 322 may be provided at a position corresponding to the inlet of the slot 214. In particular, the inlet of the pocket 324 may be provided at a position corresponding to an inlet portion adjacent to the electrode lead 202a of the battery cell 202 inserted into the slot 214 from among the entire inlet of the slot 214. This is because, when thermal runaway of the battery cell 202 occurs, gas venting frequently occurs at an edge where the electrode lead 202a of the battery cell 202 is located.

The pocket 324 may collect things with mass M discharged and falling from the battery cell 202. The pocket 324 may include a guide portion 324a and a receiving portion 324b. In this case, the guide portion 324a may be configured to guide the things with mass M discharged and falling from the battery cell 202 to the receiving portion 324b. To this end, the guide portion 324a may be formed to gradually widen from the pocket 324 toward the battery unit 200. Also, the receiving portion 324b may be configured to accommodate the things with mass M introduced through the guide portion 324a.

In an embodiment, the base portion 320 may further include a gas path 326 extending along the inside of the base portion 320. In this case, one end of the gas path 326 may be connected to an inner space of the pocket 324, and the other end of the gas path 326 may be connected to a gas outlet (not shown) provided in a specific portion of the tray 300.

In an embodiment, the base portion 320 may further include a blocking film 326a configured to block an inlet of the gas path 326 connected to the pocket 324. In this case, the blocking film 326a may be configured to rupture when ambient pressure rises above to open the inlet of the gas path 326. To this end, any of various notches or grooves may be formed in the blocking film 326a.

In an embodiment, the base portion 320 may have a stacked structure. For example, the base portion 320 may include a base plate 320a forming a bottom portion of the tray 300, and a heat sink 320b located between the base plate 320a and the battery unit 200 to cool the battery unit 200.

Also, the base portion 320 may further include a thermal interface material (TIM) 320c located between the heat sink 320b and the battery unit 200. Because a heat transfer rate between the battery unit 200 and the heat sink 320b is increased through the TIM 320c, the cooling performance of the heat sink 320b may be further improved.

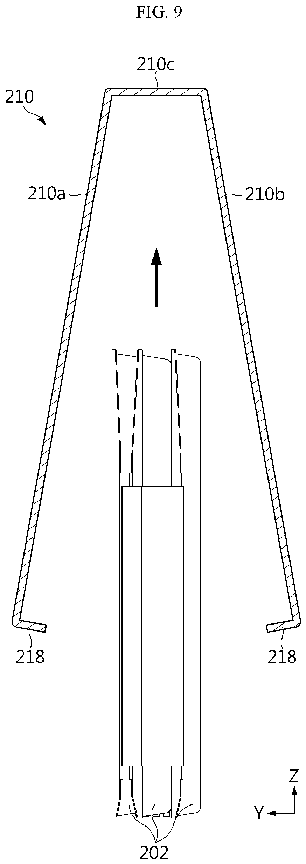

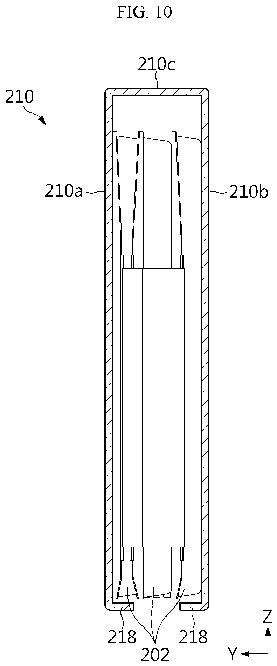

FIGS. 9 and 10 are views illustrating a battery unit assembly method, according to an embodiment of the present disclosure.

First, as shown in FIG. 9, when a finger of a jig is inserted into the cell cover 210 to widen a gap between the first cover portion 210a and the second cover portion 210b, the battery cell 202 may be safely inserted between the first cover portion 210a and the second cover portion 210b.

The blocking portion 218 of the cell cover 210 may have an appropriate length and shape so as not to damage battery cells inserted as described above.

Next, as shown in FIG. 10, when at least one battery cell 202 is inserted into the cell cover 210 and then the finger of the jig is removed, the first cover portion 210a and the second cover portion 210b of the cell cover 210 may return to their positions due to their elastic force.

Accordingly, the blocking portion 218 of the cell cover 210 may block detachment of the battery cell 202 by supporting a lower end of the battery cell 202 inserted between the first cover portion 210a and the second cover portion 210b. To this end, the blocking portion 218 may be bent from an end of each of the first cover portion 210a and the second cover portion 210b toward the inside of the cell cover 210 to form a locking structure.

In another embodiment, the blocking portion 218 of the cell cover 210 may be omitted. In this case, the battery cell 202 may be directly inserted into the slot 214 of the cell cover 210, without a process of widening a gap between the first cover portion 210a and the second cover portion 210b of the cell cover 210.

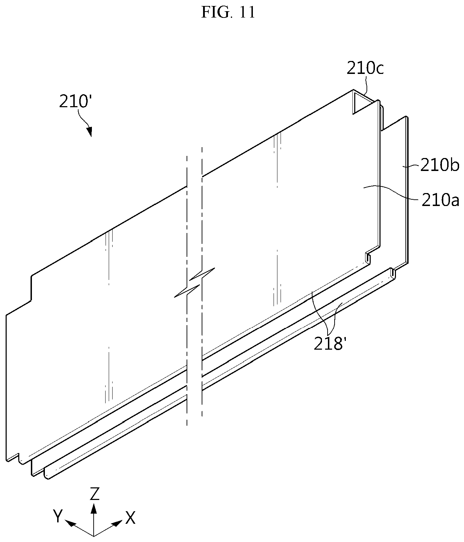

FIG. 11 illustrates a battery cell cover 210', according to a modified embodiment.

As shown in FIG. 11, a blocking portion 218' of the battery cell cover 210' may be bent from an end of each of the first cover portion 210a and the second cover portion 210b of the battery cell cover 210' toward the inside of the battery cell cover 210' and toward the third cover portion 210c to form a locking structure.

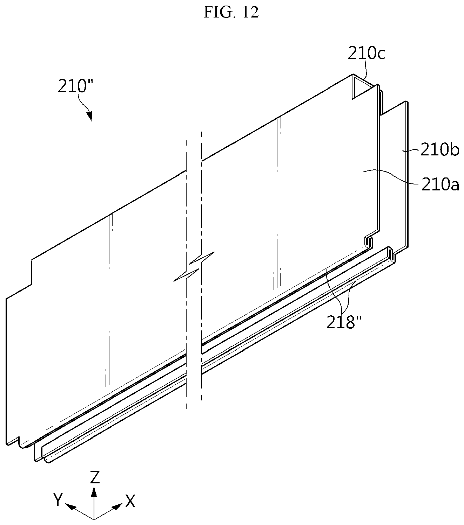

FIG. 12 illustrates a battery cell cover 210", according to another modified embodiment.

As shown in FIG. 12, a blocking portion 218" of the battery cell cover 210" may be bent from an end of each of the first cover portion 210a and the second cover portion 210b toward the third cover portion 210c and then bent in a round shape toward the opposite side of the third cover portion 210c. As such, because the blocking portion 218" supports battery cells on a round surface, damage to soft battery cells such as pouch-type battery cells may be prevented.

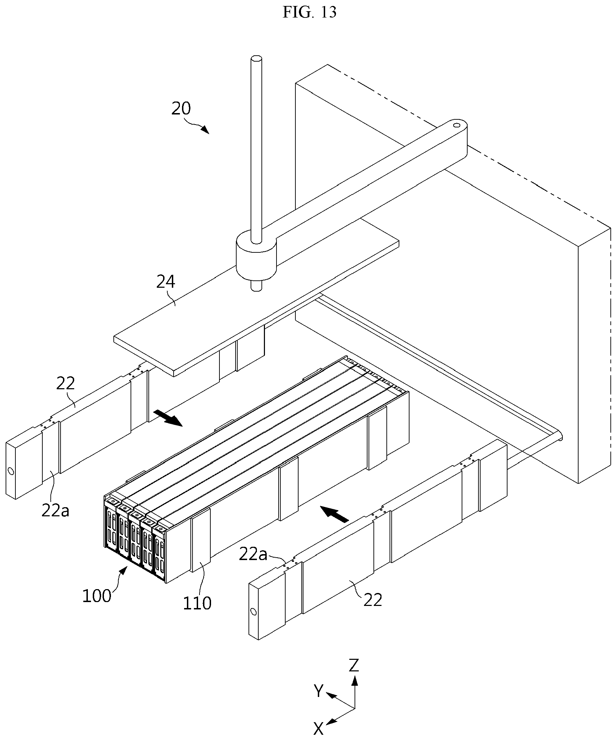

FIGS. 13 to 16 are views illustrating a battery pack manufacturing method, according to an embodiment of the present disclosure.

As shown in FIGS. 13 to 16, a battery pack according to the present disclosure may be manufactured by using an automated manufacturing device 20. In this case, the manufacturing device 20 may include a pair of gripping plates 22 and a pressing plate 24 configured to be movable.

First, as shown in FIG. 13, the pair of gripping plates 22 of the manufacturing device 20 contact both side surfaces of the battery assembly 100 to hold the battery assembly 100. A sliding groove 22a into which a portion of the support band 110 located on an outer surface of the battery assembly 100 is slidably inserted may be provided in a contact surface of the gripping plate 22 contacting the battery assembly 100.

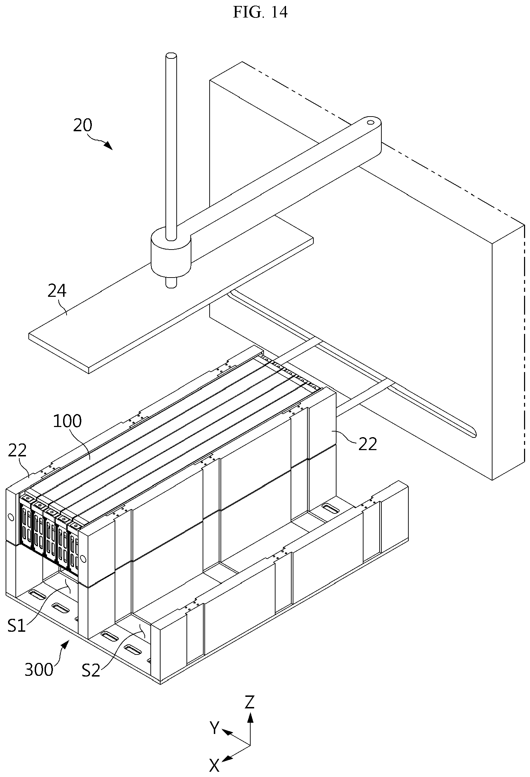

Next, as shown in FIG. 14, the manufacturing device 20 may move the pair of gripping plates 22 holding the battery assembly 100 to align the battery assembly 100 with an inlet of a pre-determined slot (e.g., S1) from among the plurality of slots S1, S2 provided in the tray 300. In this case, the sliding groove 22a provided in the pair of gripping plates 22 and the sliding groove 312a (see FIG. 7) provided in an inner surface of the slot S1 may be aligned together.

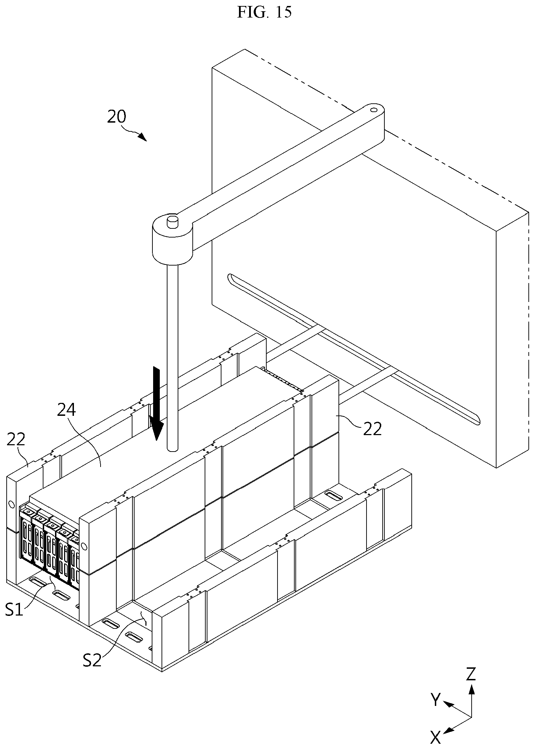

Next, as shown in FIG. 15, the manufacturing device 20 may move the pressing plate 24 between the pair of gripping plates 22 and press the battery assembly 100 located between the pair of gripping plates 22 toward the slot S1, to insert the battery assembly 100 into the slot S1.

In this case, a portion of the support band 110 inserted into the sliding groove 22a of the gripping plate 22 may slide into the slot S1 and move to the sliding groove 312a provided in the inner surface of the slot S1.

Also, the pressing plate 24 may further press the battery assembly 100 inserted into the slot S1, to uniformize heights of battery cells constituting the battery assembly 100. That is, the pressing plate 24 may flatten an upper end of the battery assembly 100 by pressing the upper end of the battery assembly 100.

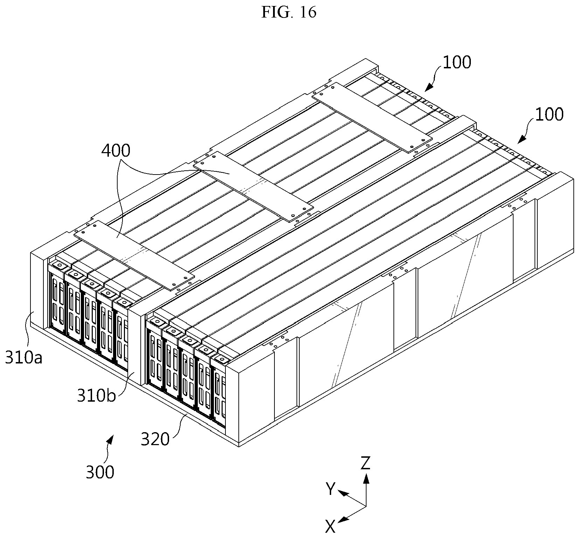

Next, as shown in FIG. 16, at least one fixing band 400 may be coupled to an inlet of the slot into which the battery assembly 100 is inserted, to fix the battery assembly 100. In this case, the fixing band 400 may be coupled to upper ends of the walls 310a, 320b forming the slot through a fastening member such as screws or bolts, or welding.

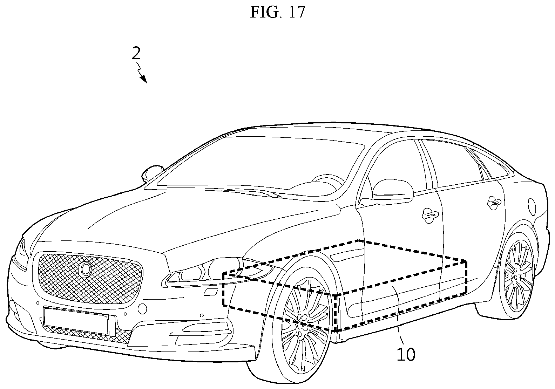

FIG. 17 illustrates a vehicle 2, according to an embodiment of the present disclosure.

As shown in FIG. 17, the vehicle 2 according to an embodiment of the present disclosure may include at least one battery pack 10 according to any one of the various embodiments described above.

As such, the battery pack 10 provided in the vehicle 2 may provide electrical energy required for various operations of the vehicle 2.

For reference, the battery pack according to the present embodiment may be applied to energy storage systems (ESSs) as well as various electric devices in addition to vehicles.

As described above, according to the present disclosure, because battery units each including at least one battery cell are directly mounted on a tray of a battery pack by using a cell-to-pack (CTP) method, rather than being accommodated in a separate case and then mounted on the tray of the battery pack, the weight and volume of the entire battery pack may be reduced and the energy density of the battery pack may be increased.

In particular, because battery units that are stacked on each other are inserted into and mounted in a first slot provided in the tray and a fixing band is coupled to an inlet of the first slot to fix the battery units to the first slot, battery cells included in the battery units may be prevented from being damaged by external impact or vibration.

Also, because a cell cover of each battery unit includes a second slot into which at least one battery cell is inserted and is configured to cover the at least one battery cell inserted into the second slot, each battery unit may be manufactured by inserting one or more battery cells into the second slot of a corresponding cell unit, and the battery pack may be manufactured by inserting the battery units configured as described above into the first slot of the tray. As a result, handling and mounting of battery cells during battery pack manufacturing may be facilitated, and manufacturing costs may be reduced. Also, a discharge direction of gas or flame generated during thermal runaway of a battery cell as well as swelling of the battery cell may be appropriately controlled.

Also, because a plurality of battery units that each include at least one battery cell and are stacked on each other constitute one battery assembly that is supported by a support band and handled as one body, handling and mounting of battery cells during battery pack manufacturing may be further facilitated.

Because a pocket is provided on the tray of the battery pack to collect things with mass such as particles or foreign materials discharged from a battery cell during thermal runaway of the battery cell, gas discharge during thermal runaway of the battery cell may be facilitated and damage or explosion of the battery pack due to an increase in internal pressure of the battery pack may be prevented.

Furthermore, one of ordinary skill in the art will clearly understand from the following description that embodiments of the present disclosure may also be used to solve various technical problems not mentioned above.

The present disclosure has been described with reference to the specific embodiments. However, it will be understood by one of ordinary skill in the art that various modifications may be made within the scope of the present disclosure. Hence, the disclosed embodiments should be considered in descriptive sense only and not for purposes of limitation. That is, the scope of the present disclosure is defined only by the following claims, and all differences within the scope will be construed as being included in the present disclosure.

## Claims

1. A battery pack comprising:
a battery assembly comprising a plurality of battery units that each comprise at least one battery cell and are stacked on each other;
a tray comprising a plurality of first slots configured to allow the battery assembly to be inserted; and
at least one fixing band coupled to an inlet of a first slot into which the battery assembly is inserted from among the plurality of first slots, to fix the battery assembly to the first slot into which the battery assembly is inserted.

2. The battery pack according to claim 1, wherein each of the plurality of battery units included in the battery assembly further comprises a cell cover comprising a second slot into which the at least one battery cell is inserted and configured to cover the at least one battery cell inserted into the second slot.

3. The battery pack according to claim 2, wherein the cell cover further comprises an opening through which an electrode lead of the at least one battery cell inserted into the second slot is exposed to an outside,
wherein each of the plurality of battery units further comprises:
a bus bar electrically connected to the electrode lead of the at least one battery cell; and
a bus bar frame located in the opening of the cell cover to support the bus bar.

4. The battery pack according to claim 2, wherein the cell cover comprises:
a first cover portion forming a first side wall of the second slot;
a second cover portion facing the first cover portion at a certain interval to form a second side wall of the second slot; and
a third cover portion connecting the first cover portion to the second cover portion.

5. The battery pack according to claim 4, wherein each of the plurality of battery units further comprises a clamping member configured to clamp the cell cover so that a gap between the first cover portion and the second cover portion of the cell cover is not widened.

6. The battery pack according to claim 1, wherein the battery assembly further comprises a support band closely attached to outer surfaces of the plurality of battery units that are stacked on each other and supporting the plurality of battery units so that a stacked state of the plurality of battery units is maintained.

7. The battery pack according to claim 6, wherein the battery assembly further comprises a side plate located between a side surface of an outermost battery unit from among the plurality of battery units and the support band.

8. The battery pack according to claim 6, wherein each of the plurality of first slots comprises an inner surface that contacts the battery assembly and guides movement of the battery assembly in an insertion direction when the battery assembly is inserted,
wherein the inner surface comprises a sliding groove along which a portion of the support band is inserted and slides in the insertion direction of the battery assembly when the battery assembly is inserted into the first slot comprising the inner surface and moves.

9. The battery pack according to claim 1, wherein the tray comprises:
a plurality of walls arranged parallel to each other at certain intervals to form the plurality of first slots; and
a base portion coupled to the plurality of walls to support the plurality of walls.

10. The battery pack according to claim 9, wherein the battery assembly further comprises a support band closely attached to outer surfaces of the plurality of battery units that are stacked on each other and supporting the plurality of battery units so that a stacked state of the plurality of battery units is maintained,
wherein the base portion comprises:
a seating surface on which the battery assembly inserted into any one of the plurality of first slots is seated; and
a fixing groove into which the support band of the battery assembly seated on the seating surface is inserted and fixed.

11. The battery pack according to claim 9, wherein the plurality of walls comprise a first wall and a second wall forming the first slot into which the battery assembly is inserted,
wherein the at least one fixing band extends in one direction so that one end in an extending direction is coupled to the first wall and the other end in the extending direction is coupled to the second wall.

12. The battery pack according to claim 9, wherein the base portion comprises a pocket provided on a seating surface of the base portion on which the battery assembly inserted into any one of the plurality of first slots is seated, the pocket being configured to collect things with mass discharged and falling from the at least one battery cell included in the battery assembly.

13. The battery pack according to claim 12, wherein the base portion further comprises a gas path extending along an inside of the base portion,
wherein the gas path is connected to an inner space of the pocket.

14. A vehicle comprising the battery pack according to any one of claims 1 to 13.

15. A battery pack manufacturing method for manufacturing the battery pack according to any one of claims 1 to 13, the battery pack manufacturing method comprising:
causing a pair of gripping plates configured to be movable to contact both side surfaces of the battery assembly to hold the battery assembly;
moving the pair of gripping plates holding the battery assembly to align the battery assembly with an inlet of a pre-determined first slot from among the plurality of first slots of the tray; and
moving a pressing plate configured to be movable between the pair of gripping plates and pressing the battery assembly located between the pair of gripping plates toward the pre-determined first slot to insert the battery assembly into the pre-determined first slot.
